# FASCICULE DE BREVET EUROPEEN

(11) **EP 1 115 613 B1**
(45) Date de publication et mention de la délivrance du brevet: **28.04.2004**
(21) Numéro de dépôt: 99943039.0
(22) Date de dépôt: 24.09.1999
(51) Int. Cl.: B64C 23/06, B63B 1/24, B63H 1/28

(54) **STRUCTURE PORTANTE A TOURBILLON MARGINAL REDUIT**
TRAGENDE STRUKTUR MIT REDUZIERTEM RANDWIRBEL
LOAD-BEARING STRUCTURE WITH REDUCED TIP VORTEX

(30) Priorité: 25.09.1998 FR 9812001
(43) Date de publication de la demande: 18.07.2001
(73) Titulaire: GECO A/S, 1370 Asker (NO); ETAT FRANCAIS représenté par le Délégué Général pour l'Armement, F-00460 Armées (FR)
(72) Inventeur: CORDIER, Stéphane, F-76000 Rouen (FR); BRIANCON-MARJOLLET, Laurence, F-78200 Mantes la Jolie (FR)
(74) Mandataire: Ilgart, Jean-Christophe
(86) Numéro de dépôt international: PCT/FR1999/002272
(87) Numéro de publication internationale: WO 2000/018641

(56) Documents cités:
- EP-A- 0 782 956
- US-A- 5 357 892
- US-A- 5 492 289
- PATENT ABSTRACTS OF JAPAN vol. 017, no. 136 (M-1384), 19 mars 1993 (1993-03-19) & JP 04 314693 A (MITSUBISHI HEAVY IND LTD), 5 novembre 1992 (1992-11-05)

## Description

L'invention se rapporte à une structure de production d'une portance dans un écoulement de milieu fluide selon le préambule de la revendication 1.

Elle peut trouver une application dans de nombreux domaines, tels que les ailes et ailerons d'avion, certains appendices de véhicules maritimes comme les ailerons, les barres de stabilisation contre le roulis, les gouvernails, les pales d'hélice, etc. ainsi que certains déflecteurs utilisés pour les essais acoustiques en mer.

Un tourbillon marginal est produit à l'extrémité libre de toutes ces structures portantes et résulte d'un mouvement du fluide transversal à la direction de l'écoulement, du côté en surpression au côté en dépression en contournant le bord libre de la structure. Le tourbillon marginal a en général une section faible mais une vitesse de rotation élevée. Il est très cohérent, c'est-à-dire que son énergie est concentrée dans un volume réduit ; il est peu soumis à des dissipations provenant de la viscosité et subsiste pendant un temps assez long. On le retrouve donc en aval de l'écoulement loin de la structure qui l'a créé, ce qui est dommageable à la discrétion acoustique si on la recherche ou si des mesures acoustiques doivent être faites à cet endroit ; et comme la vitesse du tourbillon est encore plus grande en s'approchant du centre, la dépression formée peut aller jusqu'à la cavitation du liquide, ce qui renforce encore le bruit et risque d'éroder la structure elle-même.

On retrouve le tourbillon marginal même quand une plaque transversale est installée au bout de la structure portante afin d'améliorer la portance ou de réduire la traînée en réduisant l'écoulement transversal de fluide entre le côté en surpression et le côté en dépression : il se forme alors au bord de la plaque et possède d'ailleurs souvent une cohérence plus importante que sur un bout effilé d'une structure telle qu'une aile traditionnelle.

Des mesures visant à réduire le tourbillon marginal ont été imaginées : on a ainsi rendu rugueuse la portion de surface sur laquelle le tourbillon se formait, avec l'espoir d'accroître les frottements à cet endroit et d'élargir le noyau visqueux qui se forme au centre du tourbillon afin d'y accroître la dissipation ; on a aussi pensé à exécuter des perçages en bout de la structure pour produire des pertes de charge locales ; mais l'efficacité de ces mesures n'a pas été démontrée, si bien qu'elles ne sont généralement pas utilisées.

L'abrégé du brevet JP 04 314 693 A (paru dans Patent Abstracts of Japan, vol.017, n°136 (M-1384) le 19 mars 1993, décrit une pale d'hélice dont le bord d'extrémité est dentelé en arêtes qui diffusent un tourbillon marginal.

L'objet de l'invention a pour but de réduire effets du tourbillon marginal en s'attaquant plus efficacement sa cohérence.

Le dispositif utilisé est disposé sur un contour d'extrémité libre d'une structure de production d'une portance dans un milieu fluide soumis à un écoulement, structure possédant une direction d'allongement principal au bout de laquelle se trouve ce contour ; le dispositif consiste en une pluralité d'arêtes disposées en succession en direction de l'écoulement et obliques en direction de l'écoulement, ou éventuellement perpendiculaires à cette direction. Les arêtes sont installées sur une plaque ajoutée à l'extrémité libre de la structure portante pour accroître la portance et sensiblement perpendiculaire à la portion principale de la structure. La plaque porte le contour d'extrémité libre, et les arêtes sont situées sur un bord de la plaque s'étendant sensiblement dans la direction de l'écoulement et situé d'un côté de dépression du fluide délimité par la portion principale de la structure.

Les arêtes ont pour effet de diviser le tourbillon en plusieurs tourbillons plus petits qui se juxtaposent, si bien qu'ils se contrarient et s'affaiblissent ; de plus, des turbulences seront produites aux endroits d'apparition des tourbillons et auront pour effet de réduire leur intensité.

On peut donc estimer que les risques de cavitation seront plus faibles et que la rémanence du tourbillon en aval de la structure portante sera réduite.

D'autres aspects et avantages de l'invention seront décrits à l'aide des figures suivantes, qui illustrent certaines de ses réalisations possibles :
- la figure 1 est une vue générale d'une structure portante équipée de l'invention ;
- la figure 2 illustre plus précisément une plaque d'amélioration de portance, encore équipée de l'invention ;
- la figure 2A illustre un détail d'une autre plaque porteuse de l'invention ;
- la figure 3 illustre l'apparition d'un tourbillon marginal sur une structure portante dépourvue de l'invention ;
- la figure 4 illustre l'effet de l'invention sur le tourbillon marginal ;
- les figures 5, 6 et 7 illustrent d'autres formes de la plaquette porte-arêtes ; et
- la figure 8 illustre schématiquement l'emploi de l'invention sur une ligne touée d'hydrophones ;
- et la figure 9 représente une autre réalisation de l'invention sans plaque d'extrémité qui est adaptable à une aile ou à une pale d'hélice.

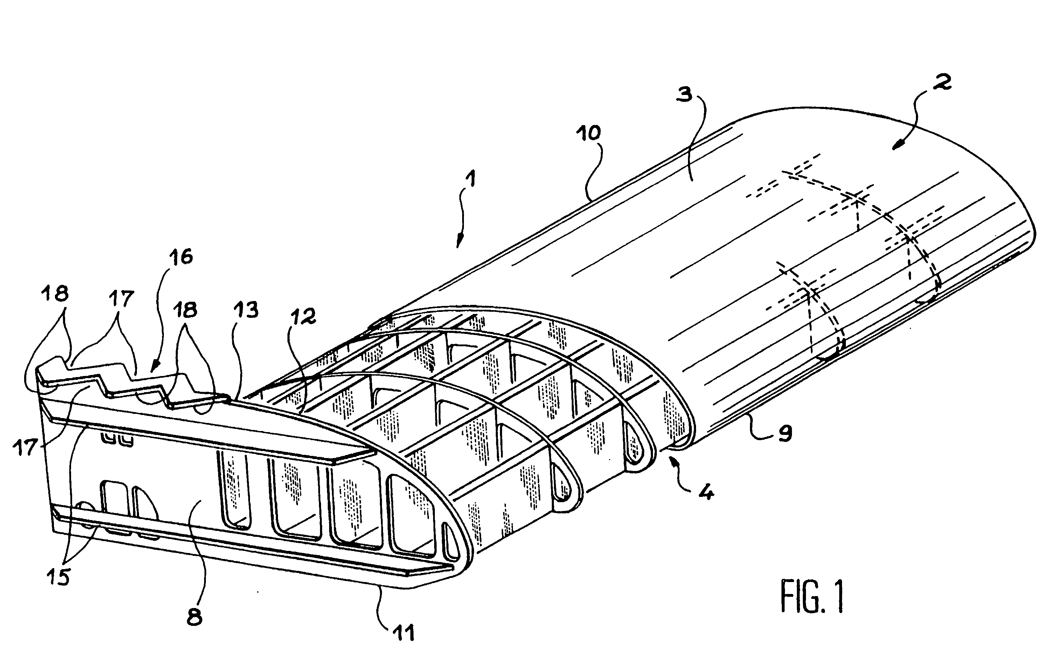

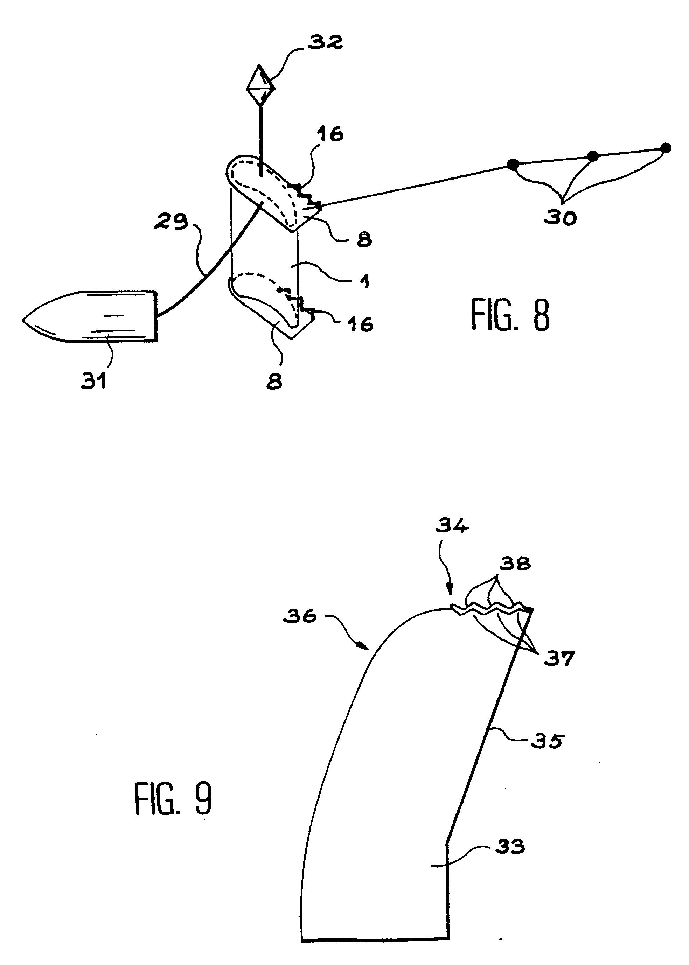

La structure de la figure 1 a une forme générale d'aile, bien qu'il s'agisse en réalité d'un déflecteur dont la fonction sera décrite plus loin en liaison à la figure 8. Elle comprend un corps 1 allongé, délimité par une enveloppe 2 continue (mais représentée seulement partiellement sur cette figure pour illustrer l'intérieur du corps 1) et dont les flancs sont recourbés de manière à présenter un extrados 3, correspondant au côté de dépression du fluide, et un intrados 4 correspondant à son côté de surpression.

Une des extrémités du corps 1, de préférence les deux, sont munies d'une plaque 8 destinée à régler l'écoulement de l'eau aux extrémités du corps 1 quand ce dernier est déplacé. Cette plaque dépasse du profil de l'aile de telle manière à créer un rebord de hauteur variable par rapport au profil. Elle comprendra un bord supérieur 12 et un bord inférieur 11.

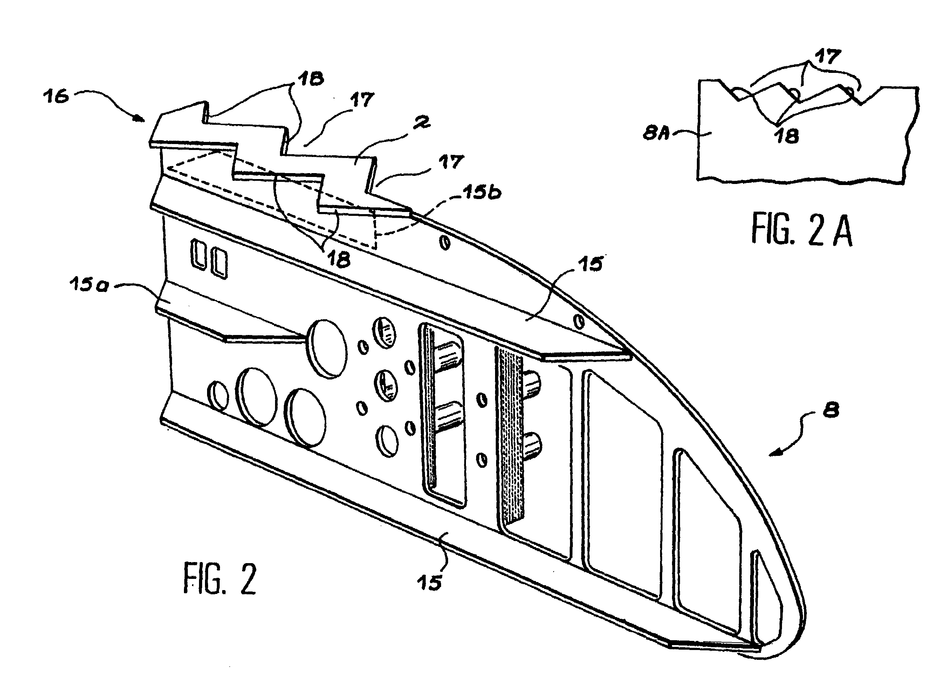

Le mode de réalisation un peu différent de la figure 2 comprend encore une nervure 15a entre les deux précédentes et une quatrième 15b, disposée sur la face opposée et tournée vers le corps 1, au-dessus de l'extrados 3.

L'élément essentiel de l'invention est une plaquette 16 allongée et dont les flancs sont entaillés d'échancrures 17 qui lui donnent l'aspect dentelé d'une lame de scie. La plaquette 16 est soudée à la plaque 8 sur une portion rectiligne 13 du bord supérieur 12 proche du bord de fuite 10 du corps 1, et sa direction d'allongement s'étend comme pour les nervures 15 en direction de l'écoulement du fluide. Les bords des échancrures 17 comprennent des arêtes 18 disposées obliquement vers le bord d'attaque 9 du corps 1.

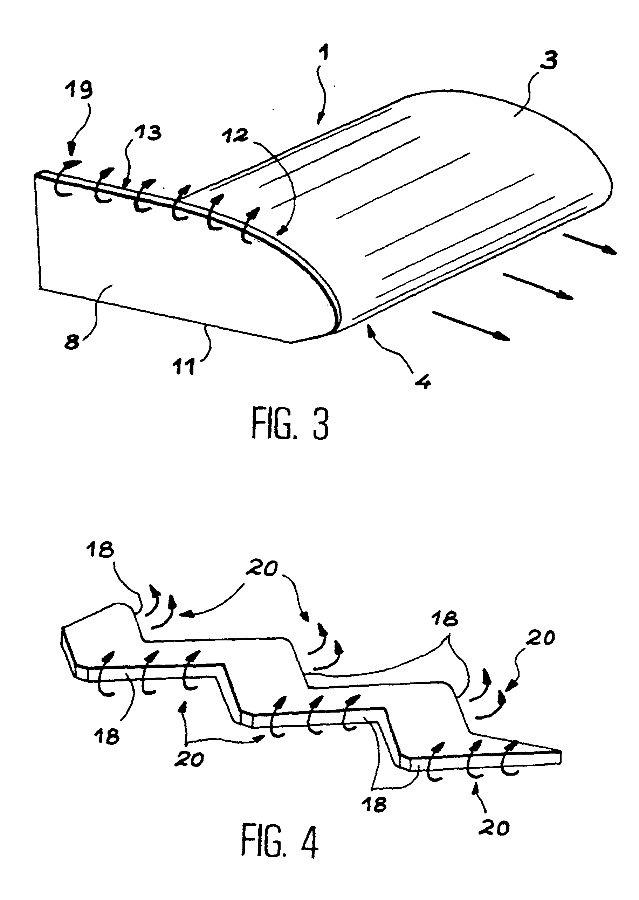

Si on se reporte à la figure 3 qui représente un déflecteur semblable au précédent mais dépourvu de la plaquette 16, on voit qu'un tourbillon 19 se forme aux endroits du fluide où le déflecteur impose des différences de pression, c'est-à-dire essentiellement au bord supérieur 12 de la plaque 8. Ce tourbillon subsiste longtemps derrière le déflecteur se déplaçant. Si la plaquette 16 est ajoutée, la figure 4 montre qu'un tourbillon 20 plus réduit se forme sur chacune des arêtes 18 tournées vers l'avant. Dans une telle situation, les filets de fluide communs à deux tourbillons adjacents sont soumis à des vitesses opposées qui tendent à s'annuler puisque tous les tourbillons 20 tournent dans la même direction. Il en résulte des dissipations importantes d'énergie qui amortissent très vite le mouvement tourbillonnant. De plus, des décollements de l'écoulement se produisent sur les arêtes 18, ce qui produit des turbulences et contrarie la formation des tourbillons 20. On obtient donc une réduction importante de la cohérence du tourbillon et des vitesses transversales et une accélération de la dissipation du tourbillon.

La plaquette 16 a été installée à l'endroit où elle est expérimentalement le plus utile, c'est-à-dire sur la portion de bord de l'élément portant qui donne sur le côté d'extrados 3, et plus précisément près du bord de fuite 10. On pourrait cependant envisager de la placer ailleurs, c'est-à-dire à d'autres positions entre le bord supérieur 12 et le bord inférieur 11 de la plaque 8. De même, les échancrures prévues sur la plaquette 16 peuvent être directement réalisées dans les bords 11 et 12 de la plaque 8 afin d'aboutir à un résultat similaire, ce que montre la plaque 8A dont un détail est représenté à la figure 2A.

Si le corps 1 était dépourvu de plaque 8, la plaquette 16 pourrait néanmoins être installée près du contour d'extrémité libre du corps 1, à la jonction de l'extrados 3 et de l'intrados 4.

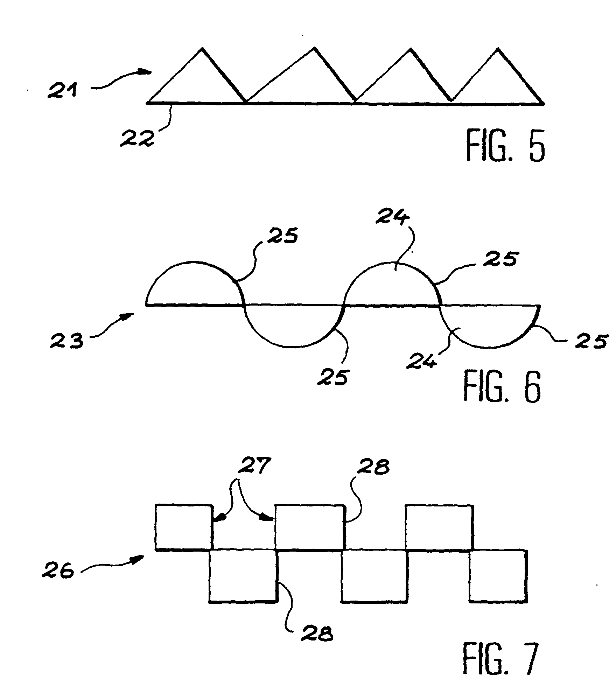

Il existe d'autres possibilités de construction de la plaquette 16 : les figures 5, 6 et 7 en donnent quelques exemples. Il sera ainsi possible (figure 5) de remplacer la plaquette 16 en forme de lame de scie par une plaquette 21 composée de dents triangulaires situées d'un seul côté ; son bord droit 22 serait soudé à la plaque 8.

La figure 6 représente une plaquette 23 dont les dents triangulaires sont remplacées par des dents 24 semi-circulaires présentant des arêtes courbes 25 au fluide ; enfin, la figure 7 illustre une plaquette 26 aux dents rectangulaires 27 présentant des arêtes 28 perpendiculaires à l'écoulement du fluide. Ces plaquettes 23 et 26 présentent encore un bord droit de jonction des deux rangées opposées de dents 24 et 27, par lequel elles peuvent être soudées à la plaque 8.

Le déflecteur des figures précédentes peut être placé sur une ligne 29 d'hydrophones 30 ou d'autres capteurs acoustiques touée par un navire 31 pour réaliser des mesures sismiques en mer. Le déflecteur est placé verticalement entre les hydrophones 30 et le navire 31 ; il est immergé mais maintenu à profondeur constante par un flotteur 32. Son but est d'exercer une portance en direction latérale afin de dévier la ligne 29 de côté pour que les hydrophones 30 restent à l'écart du sillage du navire 31. Des détails supplémentaires sur ce genre de déflecteurs pourront être trouvés dans le brevet américain 5 357 892. L'inconvénient des déflecteurs est cependant que les tourbillon marginaux produits à ses extrémités et présents loin en aval dans leur sillage perturbent la position spatiale et les mesures des hydrophones 30. C'est pourquoi une plaquette telle que 16 conforme à l'invention est ajoutée, de préférence à chacune des extrémités du déflecteur.

L'invention peut être utilisée sur des structures portantes (ailes ou hélice) dépourvues de la plaque 8 : la figure 9 illustre ainsi un aileron 33 qu'on s'est contenté d'entailler à la partie 34 adjacente au bord de fuite 35 de l'extrémité libre 36 de manière à former des dents 37 triangulaires qui présentent elles aussi des arêtes 38 orientées obliquement à la direction de l'écoulement. L'effet bénéfique des réalisations précédentes est encore obtenu. Un tel aileron 33 pourrait aussi être équipé d'une plaquette 16, 21, 23 ou 26 analogue à celle des figures précédentes.

En comparant la réalisation de la figure 9 à celle des figures 1 et 2, on voit que les arêtes constitutives de l'invention peuvent être coplanaires à la pièce formant le contour d'extrémité libre (l'aileron 33) comme perpendiculaires à cette pièce (la plaque 8). Les orientations intermédiaires sont possibles aussi.

## Revendications

1. Structure de production d'une portance dans un milieu fluide soumis à un écoulement, la structure possédant une portion principale orientée dans une direction d'allongement principal et finissant en un contour (12, 36) d'extrémité libre, le contour d'extrémité libre comprenant une pluralité d'arêtes (18, 25, 28, 38) disposées en succession en direction de l'écoulement et obliques ou perpendiculaires à la direction de l'écoulement local, **caractérisée en ce qu'**elle est munie d'une structure d'extrémité comprenant une plaque (8) sensiblement perpendiculaire à la portion principale de la structure et qui possède le contour (12) d'extrémité libre, et **en ce que** les arêtes sont situées sur un bord de la plaque s'étendant sensiblement dans la direction de l'écoulement et situé d'un côté (3) de dépression du fluide délimité par la portion principale (1) de la structure.

2. Structure selon la revendication 1, **caractérisée en ce que** les arêtes sont situées sur une portion (13, 34) du contour d'extrémité adjacente à un bord de fuite (10, 35) de la structure.

3. Structure selon la revendication 1 ou 2, **caractérisée en ce que** les arêtes sont formées par des bords d'échancrures réalisées sur la plaque (8A).

4. Structure selon l'une quelconque des revendications 1 à 3, **caractérisée en ce que** les arêtes (18) s'étendent de part et d'autre du contour (12) d'extrémité libre.

5. Structure selon l'une quelconque des revendications 1 à 4, **caractérisée en ce que** les arêtes sont formées sur un contour dentelé d'une plaquette (16, 21, 23, 26).

6. Structure selon l'une quelconque des revendications 1 à 5, **caractérisée en ce qu'**il s'agit d'une aile de véhicule aérien ou maritime.

7. Structure selon l'une quelconque des revendications 1 à 5, **caractérisée en ce qu'**il s'agit d'une pale d'hélice.

8. Structure selon l'une quelconque des revendications 1 à 5, **caractérisée en ce qu'**il s'agit d'un déflecteur suspendu à un flotteur et installé sur une ligne (29) de touage en mer entre un navire (31) et au moins un capteur acoustique (30) tel qu'un hydrophone.

## Claims

1. Structure for producing lift in a fluid medium subject to a flow, the structure having a main portion oriented in a main elongation direction and terminating in a free end contour (12, 36), which comprises a plurality of ridges (18, 25, 28, 38) arranged successively in the flow direction and oblique or perpendicular to the local flow direction, **characterized in that** it is provided with an end structure comprising a plate (8) substantially perpendicular to the main portion of the structure and which has the free end contour (12) and **in that** the ridges are located on an edge of the plate extending substantially in the flow direction and located on a low pressure side (3) of the fluid defined by the main portion (1) of the structure.

2. Structure according to claim 1, **characterized in that** the ridges are located on a portion (13, 34) of the end contour adjacent to a trailing edge (10, 35) of the structure.

3. Structure according to claim 1 or 2, **characterized in that** the ridges are formed by notch edges made on the plate (8A).

4. Structure according to any one of claims 1 to 3, **characterized in that** the ridges (18) extend on either side of the free end contour (12).

5. Structure according to any one of claims 1 to 4, **characterized in that** the ridges are formed on an indented contour of a platelet (16, 21, 23, 26).

6. Structure according to any one of claims 1 to 5, **characterized in that** it concerns an airborne or sea-going vehicle wing.

7. Structure according to any one of claims 1 to 5, **characterized in that** it concerns a propeller blade.

8. Structure according to any one of claims 1 to 5, **characterized in that** it concerns a deflector hanging from a float and installed on a sea towing line (29) between a ship (31) and at least one acoustic sensor (30) such as a hydrophone.

## Patentansprüche

1. Struktur zur Erzeugung eines Auftriebs in einem einer Strömung ausgesetzten fluiden Milieu, wobei die Struktur einen in einer Haupterstreckungsrichtung ausgerichteten Hauptabschnitt besitzt und in einer Kontur (12, 36) mit freiem Ende abschließt, wobei die Kontur mit freiem Ende mehrere Grate (18,25,28,38) aufweist, die nacheinander in Strömungsrichtung und schräg oder senkrecht zu der lokalen Strömungsrichtung angeordnet sind, **dadurch gekennzeichnet, dass** sie mit einer Endstruktur mit einer zum Hauptabschnitt der Struktur im wesentlichen senkrechten Platte (8), welche die Kontur (12) mit freiem Ende besitzt, versehen ist, und dass die Grate sich an einem Rand der Platte befinden, der sich im wesentlichen in der Strömungsrichtung erstreckt und auf einer Niederdruckseite (3) des Fluids, die vom Hauptabschnitt (1) der Struktur begrenzt ist, gelegen ist.

2. Struktur nach Anspruch 1, **dadurch gekennzeichnet, dass** die Grate an einem Abschnitt (13,34) der Endkontur angrenzend an eine Hinterkante bzw. Austrittskante (10,35) der Struktur gelegen sind.

3. Struktur nach Anspruch 1 oder 2, **dadurch gekennzeichnet, dass** die Grate von an der Platte (8A) ausgebildeten Einkerbungsrändern gebildet sind.

4. Struktur nach einem der Ansprüche 1 bis 3, **dadurch gekennzeichnet, dass** die Grate (18) sich auf beiden Seiten der Kontur (12) mit freiem Ende erstrecken.

5. Struktur nach einem der Ansprüche 1 bis 4, **dadurch gekennzeichnet, dass** die Grate an einer gezahnten Kontur einer Platte (16,21,23,26) ausgebildet sind.

6. Struktur nach einem der Ansprüche 1 bis 5, **dadurch gekennzeichnet, dass** es sich um einen Flügel eines Luftfahrzeugs oder eines Seefahrzeugs handelt.

7. Struktur nach einem der Ansprüche 1 bis 5, **dadurch gekennzeichnet, dass** es sich um ein Schraubenblatt bzw. Propellerblatt handelt.

8. Struktur nach einem der Ansprüche 1 bis 5, **dadurch gekennzeichnet, dass** es sich um einen Deflektor handelt, der an einem Schwimmer aufgehängt und an einem Schleppseil (29) im Meer zwischen einem Schiff (31) und mindestens einem akustischen Fühler (30), beispielsweise einem Hydrophon, installiert ist.
